(19) Europäisches Patentamt
European Patent Office
Office européen des brevets

(11) **EP 4 563 640 A1**

(12) **EUROPEAN PATENT APPLICATION**
published in accordance with Art. 153(4) EPC

(43) Date of publication:
**04.06.2025 Bulletin 2025/23**

(21) Application number: **23846528.0**

(22) Date of filing: **25.07.2023**

(51) International Patent Classification (IPC):
***C08L 23/10*** (2006.01)    ***C08K 3/013*** (2018.01)
***C08L 23/08*** (2025.01)

(52) Cooperative Patent Classification (CPC):
**C08K 3/013; C08L 23/08; C08L 23/10**

(86) International application number:
**PCT/JP2023/027251**

(87) International publication number:
**WO 2024/024798 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.07.2022 JP 2022117888**

(71) Applicant: **Prime Polymer Co., Ltd.
Tokyo 104-0028 (JP)**

(72) Inventors:
• **MINOWA, Akira
Tokyo 104-0028 (JP)**
• **KAWAMURA, Tatsuji
Sodegaura-shi, Chiba 299-0265 (JP)**
• **SETA, Aoi
Sodegaura-shi, Chiba 299-0265 (JP)**

(74) Representative: **J A Kemp LLP
80 Turnmill Street
London EC1M 5QU (GB)**

(54) **POLYPROPYLENE-BASED RESIN COMPOSITION AND FOAM MOLDED BODY**

(57)     One embodiment of the present invention relates to a polypropylene-based resin composition or a foam molded body containing a polypropylene-based resin composition, and the polypropylene-based resin composition is a polypropylene-based resin composition (X) containing 20 parts by mass or more and 80 parts by mass or less of an impact polypropylene (A) that satisfies the following requirements (a-1) and (a-2), 10 parts by mass or more and 40 parts by mass or less of an ethylene-based elastomer (B) that satisfies the following requirements (b-1) and (b-2), and 10 parts by mass or more and 40 parts by mass or less of an inorganic filler (C) that is talc, wherein the requirement (x-1) is satisfied.
(a-1) an MFR measured at 230°C and a load of 2.16 kg in accordance with ASTM D-1238 is 60 g/10 min or more and 300 g/10 min or less;
(a-2) a propylene/ethylene copolymer that is specified as a decane soluble part at 23°C is contained, and an intrinsic viscosity $[\eta]$ of the propylene/ethylene copolymer is 4.1 dl/g or more and 10 dl/g or less;
(b-1) an MFR measured at 190°C and a load of 2.16 kg in accordance with ASTM D-1238 is 0.5 g/10 min or more and 30 g/10 min or less;
(b-2) a density is 0.85 g/cm$^3$ or more and 0.875 g/cm$^3$ or less; and
(x-1) a content of a polypropylene component having a molecular weight of $10^{6.5}$ or more is less than 0.05 mass% relative to 100 mass% of the polypropylene-based resin composition (X).

## Description

Technical Field

One embodiment of the present invention relates to a polypropylene-based resin composition or a foam molded body containing a polypropylene-based resin composition.

Background Art

Polypropylene resins are excellent in terms of, for example, moldability, physical property balance, recycling characteristics and cost performance, and are thus in wide use in a variety of fields including, for example, daily necessities, housing field, home appliance field, automotive parts. In the fields of automobile interior and exterior parts, for example, there are cases where foam molded bodies of polypropylene, for example, are used from the viewpoint of weight reduction. As an example of a composition that can be used to manufacture such foam molded bodies, Patent Literature 1 discloses a polypropylene-based resin composition for foaming containing a resin composition containing 40 to 95 mass% of at least one propylene polymer (A) selected from the group consisting of a propylene homopolymer (A-1) and a propylene-ethylene copolymer (A-2) and 5 to 60 mass% of an ethylene-α-olefin copolymer (B) (provided that the sum of (A) and (B) is 100 mass%) and a β crystal nucleating agent. In addition, it is disclosed that a foam molded body in which a streaky appearance defect called silver streak is not frequently caused can be provided from the polypropylene-based resin composition for foaming.

At the time of manufacturing a foam molded body, a core-back molding method is used in some cases. Regarding a polypropylene-based resin composition that can be used in the core-back molding method, Patent Literature 2 discloses a linear polypropylene-based resin composition that is composed of a linear propylene polymer portion and a linear ethylene/propylene random copolymer portion, has a specific physical property including a melt flow rate (MFR: 230°C, 2.16 kg load) exceeding 60 g/10 minute and a specific composition, and containing a strain-hardening linear propylene/ethylene block copolymer and a foaming agent. As an effect of the use of such a linear polypropylene-based resin composition, Patent Literature 2 discloses that air bubbles are made less likely to break at the flow front, the generation of unevenness on the surface of a foam molded body is prevented, and an injection foam molded body having an excellent surface appearance can be provided.

Patent Literature 3 discloses a polypropylene-based resin composition for foam molding (X) containing a polypropylene-based resin composition (A) having a sea-island structure containing a polypropylene-based resin as a sea component and a thermoplastic resin as an island component and a foaming agent (B), and a propylene/ethylene block copolymer having MFR (230°C, 2.16 kg load) of 50 to 300 g/10 min is exemplified as the polypropylene-based resin composition (A). Patent Literature 3 discloses that, in the polypropylene-based resin composition (A), the sea component and the island component are formed so that a specific interfacial area amount of a specific value or more can be obtained, whereby turbulence or the entrainment of bubble is made less likely to occur at the melt front (the tip portion of the resin flow), and the generation of a dimple on the surface of an injection foam molded body is suppressed.

Citation List

Patent Literature

Patent Literature 1: JP2008-255191A
Patent Literature 2: JP2010-144133A
Patent Literature 3: JP2014-196398A

Summary of Invention

As a result of the present inventors' intensive studies, it is found that the composition described in Patent Literature 1 has a problem in that the impact resistance is low and a dimple (dent) is easily generated. In molded bodies for which the composition of Patent Literature 2 or 3 is used, the generation of a dimple is suppressed, but the composition of Patent Literature 2 requires the strain-hardening linear propylene/ethylene block copolymer polypropylene component, and in the composition of Patent Literature 3, there is a need to form the sea component and the island component in the polypropylene-based resin composition (A) so that a specific interfacial area amount of a specific value or more can be obtained, and the composition described in any of Patent Literature 2 and 3 is thus also poorly versatile and is not a composition that can be easily produced. Furthermore, the compositions described in Patent Literature 2 and 3 have relatively large resistance during flow and are thus not suitable for the molding of parts having a long flow length.

Since foam has a lower impact resistance compared with non-foam, there is a need for a resin composition that can be used to manufacture a molded body having excellent impact resistance. In addition, in order to stably manufacture foam, there is a need for a resin composition that can be easily manufactured and is capable of suppressing an appearance defect such as a flow mark, poor foaming, or a dimple.

Therefore, one embodiment of the present invention is to provide a polypropylene-based resin composition that does not easily cause an appearance defect such as a dimple, poor foaming, or a flow mark on the surface of a molded body, can be used to manufacture a molded body having excellent impact resistance, and can be relatively easily produced.

Solution to Problem

Configuration examples of the present invention are as follows:
In the present specification, "A to B" indicating a numerical ranges indicate A or more and B or less.

[1] A polypropylene-based resin composition (X), comprising:

20 parts by mass or more and 80 parts by mass or less of an impact polypropylene (A) that satisfies the following requirements (a-1) and (a-2);
10 parts by mass or more and 40 parts by mass or less of an ethylene-based elastomer (B) that satisfies the following requirements (b-1) and (b-2); and
10 parts by mass or more and 40 parts by mass or less of an inorganic filler (C) that is talc, provided that a total amount of the impact polypropylene (A), the ethylene-based elastomer (B), and the inorganic filler (C) is 100 parts by mass,
wherein the following requirement (x-1) is satisfied:

(a-1) an MFR measured at 230°C and a load of 2.16 kg in accordance with ASTM D-1238 is 60 g/10 min or more and 300 g/10 min or less;
(a-2) a propylene/ethylene copolymer that is specified as a decane soluble part at 23°C is contained, and an intrinsic viscosity $[\eta]$ of the propylene/ethylene copolymer measured in decalin at 135°C is 4.1 dl/g or more and 10 dl/g or less;
(b-1) an MFR measured at 190°C and a load of 2.16 kg in accordance with ASTM D-1238 is 0.5 g/10 min or more and 100 g/10 min or less;
(b-2) a density is 0.85 g/cm$^3$ or more and 0.875 g/cm$^3$ or less; and
(x-1) a content of a polypropylene component having a molecular weight of $10^{6.5}$ or more is less than 0.05 mass% relative to 100 mass% of the polypropylene-based resin composition (X).

[2] The polypropylene-based resin composition (X) according to [1], wherein the impact polypropylene (A) further satisfies at least one of the following requirements (a-1-1), (a-2-1), and (a-5):

(a-1-1) an MFR measured at 230°C and a load of 2.16 kg in accordance with ASTM D-1238 is 77 g/10 min or more and 200 g/10 min or less;
(a-2-1) the propylene/ethylene copolymer that is specified as a decane soluble part at 23°C is contained, and an intrinsic viscosity $[\eta]$ of the propylene/ethylene copolymer measured in decalin at 135°C is 4.2 dl/g or more and 5.9 dl/g or less;
and
(a-5) a content of the propylene/ethylene copolymer that is specified as the decane soluble part (Dsol) at 23°C that is contained in the impact polypropylene (A) is 5 to 30 mass%, based on a mass of the impact polypropylene (A) of 100 mass%.

[3] The polypropylene-based resin composition (X) according to [1] or [2], wherein a content of the propylene/ethylene copolymer in the polypropylene-based resin composition (X) is 5 parts by mass or more and 30 parts by mass or less, provided that the total amount of the impact polypropylene (A), the ethylene-based elastomer (B), and the inorganic filler (C) is 100 parts by mass.
[4] The polypropylene-based resin composition (X) according to any one of [1] to [3], wherein the ethylene-based elastomer (B) is a copolymer of ethylene and an $\alpha$-olefin having 3 to 10 carbon atoms.
[5] The polypropylene-based resin composition (X) according to any one of [1] to [4], wherein

a content of the impact polypropylene (A) is 25 parts by mass or more and 74 parts by mass or less, a content of the ethylene-based elastomer (B) is 10 parts by mass or more and 40 parts by mass or less, and a content of the inorganic filler (C) is 16 parts by mass or more and 35 parts by mass or less, provided that the total amount of the impact polypropylene (A), the ethylene-based elastomer (B), and the inorganic filler (C) is 100 parts by mass.

[6] A foam molded body that is composed of the polypropylene-based resin composition (X) according to any one of [1] to [5] and is molded using a foaming agent (D).

[7] A part for automobile interior and exterior, comprising the polypropylene-based resin composition (X) according to any one of [1] to [5].

[8] An arch molding, comprising the polypropylene-based resin composition (X) according to any one of [1] to [5].

[9] A rocker molding, comprising the polypropylene-based resin composition (X) according to any one of [1] to [5].

[10] A method for manufacturing a foam molded body, comprising a step of foaming the polypropylene-based resin composition (X) according to any one of [1] to [5].

[11] The method for manufacturing a foam molded body according to [10], wherein injection foam molding or core-back injection molding is performed.

Advantageous Effects of Invention

One embodiment of the present invention makes it possible to provide a polypropylene-based resin composition that does not easily cause an appearance defect such as a dimple, poor foaming, or a flow mark on the surface of a molded body, can be used to manufacture a molded body having excellent impact resistance, and can be relatively easily produced.

Description of Embodiments

<<Polypropylene-Based Resin Composition (X)>>

A polypropylene-based resin composition (X) according to one embodiment of the present invention (hereinafter, also referred to as "the resin composition (X)") contains an impact polypropylene (A) satisfying predetermined requirements and an ethylene-based elastomer (B) satisfying predetermined requirements and may further contain an inorganic filler (C).

<Impact Polypropylene (A)>

The impact polypropylene (A) that is used in the resin composition (X) satisfies the following requirements (a-1) and (a-2) and preferably further satisfies one or more of the following requirements (a-3) to (a-5).

[Requirement (a-1)]

The melt flow rate measured at 230°C and a load of 2.16 kg in accordance with ASTM D-1238 (hereinafter, also referred to as "MFR") is 60 to 300 g/10 min, preferably 60 to 250 g/10 min, more preferably 60 to 200 g/10 min, still more preferably 70 to 180 g/10 min, particularly preferably 77 to 160 g/10 min, and especially preferably 90 to 155 g/10 min.

When the MFR of the impact polypropylene (A) is within the above range, the appearance of a molded article that is obtained from the resin composition (X) containing the impact polypropylene (A) becomes favorable, and the moldability and physical properties of the resin composition (X) are thus favorable.

[Requirement (a-2)]

The impact polypropylene (A) contains a propylene/ethylene copolymer that is specified as a decane soluble part (Dsol) at 23°C, and the intrinsic viscosity (135°C, decalin) $[\eta]$ of the propylene/ethylene copolymer is 4.1 to 10 dl/g, preferably 4.1 to 8.0 dl/g, more preferably 4.2 to 7.0 dl/g, and still more preferably 4.5 to 5.9 dl/g.

When the intrinsic viscosity $[\eta]$ of the propylene/ethylene copolymer is within the above range, the appearance of a molded body that is obtained from the resin composition (X) containing the impact polypropylene (A) is favorable, and the moldability of the resin composition (X) is also favorable.

[Requirement (a-3)]

The impact polypropylene (A) preferably contains a propylene homopolymer that is specified as a decane insoluble part (Dinsol) at 23°C, and the MFR (230°C, 2.16 kg load) of the propylene homopolymer is preferably 200 to 800 g/10 min, more preferably 250 to 600 g/10 min, and still more preferably 310 to 550 g/10 min. When the MFR of the propylene homopolymer is within the above range, the molded product appearance becomes favorable. A method for measuring the MFR of the propylene homopolymer is as described in Examples to be described below.

[Requirement (a-4)]

The amount of a polypropylene component having a molecular weight of $10^{6.5}$ or more that is contained in the impact polypropylene (A) relative to 100 mass% of the impact polypropylene (A) is preferably less than 0.05 mass%, more preferably less than 0.03 mass%, still more preferably less than 0.02 mass%, and particularly preferably less than 0.01 mass%. In addition, the impact polypropylene (A) may not contain the polypropylene component having a molecular weight of $10^{6.5}$ or more.

When the amount of the polypropylene component having a molecular weight of $10^{6.5}$ or more that is contained in the impact polypropylene (A) is within the above range, it is possible to effectively suppress the generation of a dimple in a foam molded body that is obtained from the resin composition (X) into which the impact polypropylene (A) has been blended. The amount of the polypropylene component having a molecular weight of $10^{6.5}$ or more that is contained in the impact polypropylene (A) can be adjusted with, for example, the kind of a catalyst that is used at the time of producing the impact polypropylene (A). A method for measuring the amount of the polypropylene component having a molecular weight of $10^{6.5}$ or more is as described in Examples to be described below.

[Requirement (a-5)]

The content of the propylene/ethylene copolymer that is specified as the decane soluble part (Dsol) at 23°C that is contained in the impact polypropylene (A) is not particularly limited as long as the content of the propylene/ethylene copolymer in the resin composition (X) can be adjusted so as to be within a range to be described below, but is preferably 5 to 35 mass%, more preferably 9 to 30 mass%, and still more preferably 12 to 25 mass%, based on the mass of the impact polypropylene (A) of 100 mass%. Here, the sum of the decane soluble part (Dsol) and the decane insoluble part (Dinsol) is 100 mass%. When the amount of the propylene/ethylene copolymer that is contained in the impact polypropylene (A) is within the above range, it is easy to adjust the content of the propylene/ethylene copolymer in the resin composition (X) to a predetermined range.

The content of the impact polypropylene (A) in the resin composition (X) is 20 to 80 parts by mass (provided that the total amount of the impact polypropylene (A), the ethylene-based elastomer (B), and the inorganic filler (C) is 100 parts by mass), preferably 25 to 78 parts by mass, more preferably 30 to 78 parts by mass, still more preferably 40 to 76 parts by mass, particularly preferably 40 to 74 parts by mass, and especially preferably 45 to 68 parts by mass. When the content of the impact polypropylene (A) is within the above range, the appearance and physical properties of the molded body that is obtained from the resin composition (X) are favorable, and the moldability of the resin composition (X) is favorable.

One kind of the impact polypropylene (A) may be used singly or two or more thereof may be used. In a case where two or more thereof are used, each of the impact polypropylenes (A) that are used preferably satisfies the requirements (a-1) and (a-2). In addition, in a case where two or more thereof are used, the total amount of the impact polypropylenes (A) that are used is adjusted so as to satisfy the above range of the content.

The impact polypropylene (A) may contain at least one biomass-derived monomer. The biomass-derived monomer that is contained in the impact polypropylene (A) may be a biomass-derived $\alpha$-olefin, and examples thereof include biomass-derived ethylene and biomass-derived propylene. The same kind of monomers that configure a polymer that is contained in the impact polypropylene (A) may be only biomass-derived monomers or may contain both a biomass-derived monomer and a fossil fuel-derived monomer. The biomass-derived $\alpha$-olefin such as biomass-derived ethylene or biomass-derived propylene can be obtained by a known method.

Here, biomass-derived monomers refer to monomers composed of, as a raw material, any renewable natural raw materials derived from, for example, a plant or an animal, including fungi, yeasts, algae, and bacteria, or residues thereof, and when all carbon that is contained in the monomer is regarded as one, a $^{14}$C isotope is contained in a proportion of approximately $10^{-12}$. In addition, in the biomass-derived monomer, the biomass carbon concentration (pMC, percent Modern Carbon) measured in accordance with ASTM D 6866 is approximately 100 (pMC).

The impact polypropylene (A) preferably contains the biomass-derived monomer from the viewpoint of environmental impact reduction. As long as the polymer production conditions such as a catalyst for polymerization and the polymerization temperature are the same, even when the raw material olefin contains a biomass-derived olefin, the molecular structure except the $^{14}$C isotope being contained in a proportion of approximately $10^{-12}$ of all carbon is the same as the impact polypropylene (A) composed of a fossil fuel-derived monomer. Therefore, in the impact polypropylene (A) containing a biomass-derived monomer and the impact polypropylene (A) composed of a fossil fuel-derived monomer, the performance also does not differ.

The impact polypropylene (A) may contain a chemical recycling-derived monomer. A monomer that configures the polymer may be a chemical recycling-derived α-olefin, and examples thereof include chemical recycling-derived ethylene and chemical recycling-derived propylene.

The same kind of monomers that configure a polymer that is contained in the impact polypropylene (A) may be only chemical recycling-derived monomers or may contain both a chemical recycling-derived monomer and a fossil fuel-derived monomer and/or a biomass-derived monomer. The chemical recycling-derived monomer can be obtained by a conventionally known method. The impact polypropylene (A) according to the present invention preferably contains the chemical recycling-derived monomer from the viewpoint of environmental impact reduction (mainly waste reduction). Even when the raw material monomer contains the chemical recycling-derived monomer, since the chemical recycling-derived monomer is a monomer obtained by returning a polymer such as waste plastic to a monomer unit such as propylene by, for example, depolymerization or pyrolysis, or a monomer produced using the monomer as a raw material, as long as the polymer production conditions such as the catalyst for polymerization, polymerization process and the polymerization temperature are the same, the molecular structure is the same as an impact polypropylene composed of a fossil fuel-derived monomer. Therefore, it is considered that the performance also does not change.

<Ethylene-Based Elastomer (B)>

The ethylene-based elastomer (B) that is used in the resin composition (X) satisfies the following requirements (b-1) and (b-2) and preferably further satisfies the following requirement (b-3).

[Requirement (b-1)]

The MFR measured at 190°C and a load of 2.16 kg in accordance with ASTM D-1238 is 0.5 to 30 /10 min or more, preferably 0.9 to 30 g/10 min, and more preferably 10 to 30 g/10 min. When the MFR of the ethylene-based elastomer (B) exceeds 30 g/10 min, there is a tendency that the impact resistance deteriorates. When the MFR of the ethylene-based elastomer (B) is within the above range, the moldability of the resin composition (X) containing the ethylene-based elastomer (B) is favorable, and the appearance and impact resistance of the molded body that is obtained from the resin composition (X) are favorable.

[Requirement (b-2)]

The density of the ethylene-based elastomer (B) is 0.85 to 0.875 g/cm$^3$, preferably 0.85 to 0.874 g/cm$^3$, and more preferably 0.855 to 0.873 g/cm$^3$. When the density is less than 0.85 g/cm$^3$, there are cases where the foam moldability is poor. In addition, when the density exceeds 0.875 g/cm$^3$, the impact resistance is poor. When the density of the ethylene-based elastomer (B) is within the above range, the moldability and impact resistance of a molded body to be obtained become favorable.

[Requirement (b-3)]

The ethylene-based elastomer (B) is preferably a copolymer of ethylene and an α-olefin having 3 to 10 carbon atoms. Specific examples of the α-olefin having 3 to 10 carbon atoms that is copolymerized with ethylene include propylene, 1-butene, 1-pentene, 1-hexene, 4-methyl-1-pentene, 3-methyl-1-pentene, 1-heptene, 1-octene, 1-nonene, and 1-decene. These α-olefins may be used in combinations of two or more thereof. Among these, 1-butene and 1-octene are particularly preferable since the impact resistance of a molded body to be obtained becomes favorable.

The content of the ethylene-based elastomer (B) in the resin composition (X) is 10 to 40 parts by mass (provided that the total amount of the impact polypropylene (A), the ethylene-based elastomer (B), and the inorganic filler (C) is 100 parts by mass), preferably 10 to 35 parts by mass, more preferably 10 to 30 parts by mass, and still more preferably 16 to 30 parts by mass. When the content of the ethylene-based elastomer (B) is within the above range, the moldability of the resin composition (X) is favorable, and the appearance and impact resistance of the molded body that is obtained from the resin composition (X) are favorable.

The ethylene-based elastomer (B) may be used singly or in combination of two or more thereof. In a case where two or more thereof are used, each of the ethylene-based elastomers (B) that are used preferably satisfies the requirements (b-1) and (b-2). In addition, in a case where two or more thereof are used, the total amount of the ethylene-based elastomers (B) that are used is adjusted so as to satisfy the above range of the content.

<Inorganic Filler (C)>

The inorganic filler (C) that can be used in one embodiment of the present invention is not particularly limited, and examples thereof include heavy calcium carbonate, light calcium carbonate, talc, wollastonite, MOS-HIGE (registered trademark), carbon fiber, glass fiber, magnesium carbonate, mica, kaolin, calcium sulfate, barium sulfate, titanium white, white carbon, carbon black; metal oxides such as aluminum oxide, magnesium oxide, silicon oxide, and zinc oxide; metal hydroxides such as aluminum hydroxide and magnesium hydroxide; metal nitrides such as boron nitride and aluminum nitride; metal oxynitrides such as aluminum oxynitride; metal carbides such as silicon carbide; metals such as gold, silver, copper, and aluminum or metal alloys; natural graphite, artificial graphite, and expanded graphite. These can be used singly or two or more thereof can be mixed and used. Among these, the use of talc is most preferable.

The shape of the talc is not particularly limited, but talc having D50 ($\mu$m) in the number-based particle size distribution measured by a laser diffraction/scattering method of normally 0.5 to 20 $\mu$m and preferably 1.0 to 15 $\mu$m is suitably used.

The content of the inorganic filler (C) in the resin composition (X) is 10 to 40 parts by mass (provided that the total amount of the impact polypropylene (A), the ethylene-based elastomer (B), and the inorganic filler (C) is 100 parts by mass), preferably 12 to 35 parts by mass, more preferably 14 to 30 parts by mass, and still more preferably 16 to 25 parts by mass. When the content of the inorganic filler (C) is within the above range, the balance between the flexural modulus and impact resistance of a molded body that is formed from the resin composition (X) becomes favorable.

<Other component>

The resin composition (X) may contain a variety of additives as necessary to an extent that the object of the present invention is not impaired. Specific examples of the additives include a nucleating agent, an antioxidant, a hydrochloric acid absorber, a heat stabilizer, a weather stabilizer, a light stabilizer, a UV absorber, a lubricant, an antistatic agent, a flame retardant, a pigment, a dye, a dispersant, a copper damage inhibitor, a neutralizing agent, a plasticizer, a crosslinking agent, a flow improver (for example, a peroxide), a weld strength improver, a natural oil, a synthetic oil, and wax.

<Resin Composition (X)>

The resin composition (X) satisfies the following requirement (x-1) and preferably further satisfies the following requirement (x-2).

[Requirement (x-1)]

Relative to 100 mass% of the resin composition (X), the amount of the polypropylene component having a molecular weight of $10^{6.5}$ or more that is contained in the resin composition (X) is less than 0.05 mass%, preferably less than 0.03 mass%, and more preferably less than 0.01 mass%. In addition, the resin composition (X) may not contain the polypropylene component having a molecular weight of $10^{6.5}$ or more.

When the amount of the polypropylene component having a molecular weight of $10^{6.5}$ or more that is contained in the resin composition (X) is within the above range, it is possible to effectively suppress the generation of a dimple in a foam molded body that is obtained from the resin composition (X). The amount of the polypropylene component having a molecular weight of $10^{6.5}$ or more that is contained in the resin composition (X) can be adjusted by, for example, using the impact polypropylene (A) in which the content of the polypropylene component having a molecular weight of $10^{6.5}$ or more is low at the time of producing the resin composition (X). The method for measuring the amount of the polypropylene component having a molecular weight of $10^{6.5}$ or more is as described in Examples to be described below.

[Requirement (x-2)]

The content of the propylene/ethylene copolymer that is specified as a decane soluble part (Dsol) at 23°C in the resin composition (X) is preferably 1 to 30 parts by mass (provided that the total amount of the impact polypropylene (A), the ethylene-based elastomer (B), and the inorganic filler (C) is 100 parts by mass), more preferably 3 to 30 parts by mass, and still more preferably 5 to 30 parts by mass. The content of the propylene/ethylene copolymer is a value that is obtained by a method to be described in Examples. When the content of the propylene/ethylene copolymer is within the above range, the resin composition (X) is excellent in terms of moldability, and the appearance and impact resistance of the molded body that is obtained from the resin composition (X) are favorable.

<Method for Producing Resin Composition (X)>

The resin composition (X) can be produced by melting and kneading the impact polypropylene (A), the ethylene-based elastomer (B), the inorganic filler (C), and the other additives as necessary using a conventionally known mixing device such as a kneader.

<Foam Molded Body>

A foam molded body according to one embodiment of the present invention is manufactured using the resin composition (X). That is, the foam molded body according to one embodiment of the present invention is a molded body that can be obtained by adding a foaming agent (D) to the resin composition (X) and performing molding.

The foaming agent (D) that is used to manufacture the foam molded body according to one embodiment of the present invention is not particularly limited, and a known chemical foaming agent or physical foaming agent can be used. The amount of the foaming agent (D) added is preferably 0.1 to 10 parts by mass and more preferably 0.2 to 8 parts by mass relative to 100 parts by mass of the resin composition(X).

The chemical foaming agent may be an inorganic compound or an organic compound, and two or more may be used. Examples of the inorganic compound that can be used as the chemical foaming agent include, for example, bicarbonates such as sodium bicarbonate. Examples of the organic compound that can be used as the chemical foaming agent include, for example, polycarboxylic acids such as citric acid, azo compounds such as azodicarbonamide (ADCA).

Examples of the physical foaming agent include, for example, inert gases such as nitrogen and carbon dioxide, volatile organic compounds. Among these, carbon dioxide or nitrogen in a supercritical state or a mixture thereof is preferably used. Physical foaming agents may be used in combinations of two or more, or a chemical foaming agent and a physical foaming agent may be used in combinations thereof.

In a case where the physical foaming agent is used, the physical foaming agent is preferably put into a supercritical state and mixed into the resin composition (X) in a molten state. Since the physical foaming agent in a supercritical state has high solubility in resins and is capable of uniformly dispersing in the polypropylene-based resin composition in a molten state within a short period of time, it is possible to obtain a foam molded body having a high foaming ratio and a uniform foam cell structure.

Examples of a step of mixing the physical foaming agent into the polypropylene-based resin composition in a molten state include a step of injecting the physical foaming agent into the nozzle or cylinder of an injection molding machine.

Specific examples of a method for foam-molding the resin composition (X) include known methods such as an injection foam molding method, a press foam molding method, an extrusion foam molding method, and a stampable foam molding method.

The foam molded body according to one embodiment of the present invention can also be made into a decorative foam molded body by pasting a skin material to the surface of the foam molded body by a method such as insert molding or adhesion.

A molding mold that is used for injection foam molding is composed of, for example, a fixed molding and a movable molding, and these are preferably in a mold clamping state during the injection filling of the resin composition (X). In addition, the volume of the cavity can be increased by retreating (core-backing) the movable molding to expand the cavity. The volume of the cavity is preferably increased by leaving the molding mold for an appropriate period of time after the injection filling. The core movement speed during the core-back can be determined as appropriate depending on the thickness of the molded body, the kind of the resin, the kind of the foaming agent, the molding temperature, and the resin temperature.

The temperature of the resin composition (X) and the mold temperature at the time of injection-molding the resin composition (X) vary depending on conditions such as the thickness of a molded body to be manufactured, but a temperature that is normally used for the molding of polypropylene-based resins can be applied. Specifically, the temperature of the resin composition (X), for example, at the time of injection is normally 180°C to 250°C and preferably 200°C to 220°C. The surface temperatures of the fixed molding and the movable molding are normally 10°C to 100°C and preferably 30°C to 80°C.

In the foam molded body that is obtained by foam-molding the resin composition (X), the balance between the viscosity of the polypropylene component and the viscosity of the ethylene-based elastomer has been adjusted, whereby an appearance defect such as a dimple, poor foaming, or a flow mark is less likely to be caused on the surface of the molded body that is formed from the resin composition (X). In addition, since the pressure change of the resin composition (X) at the flow front (the tip portion of the flow of the molten resin composition (X)) is small at the time of filling the cavity with the resin composition (X), pulsation or meandering at the flow front is less likely to occur. Therefore, it is assumed that the generation of an air bubble accompanied with the pressure change or the difference in the orientation of the ethylene-based elastomer becomes small, the generation of a dimple or poor foaming is less likely to occur, and a flow mark is less likely to be generated.

The molded body manufactured from the resin composition (X) can be suitably used in, for example, a variety of uses such as parts for automobile interior and exterior, substitutes for cardboard, electrical appliances, and building materials. Examples of the parts for automobile interior and exterior include, for example, an arch molding, a rocker molding, a side sill protector and a back door, and an arch molding and a rocker molding are preferable.

Examples

Hereinafter, the present invention will be described in detail with Examples, but the present invention is not limited to these Examples.

<Raw Materials>

Raw materials used in the following Examples and Comparative Examples are as described below.

[Impact Polypropylene (A)]

· "Impact polypropylene (A-1)": MFR (230°C, 2.16 kg load) = 97 g/10 min, proportion of room temperature decane soluble part = 14.3 mass%, intrinsic viscosity [η] of room temperature decane soluble part = 5.0 dl/g
· "Impact polypropylene (A-2)": MFR (230°C, 2.16 kg load) = 144 g/10 min, proportion of room temperature decane soluble part = 13.4 mass%, intrinsic viscosity [η] of room temperature decane soluble part = 4.8 dl/g
· "Impact polypropylene (A-3)": MFR (230°C, 2.16 kg load) = 128 g/10 min, proportion of room temperature decane soluble part = 14.3 mass%, intrinsic viscosity [η] of room temperature decane soluble part = 5.0 dl/g
· "Impact polypropylene (A-4)": MFR (230°C, 2.16 kg load) = 79 g/10 min, proportion of room temperature decane soluble part = 12.9 mass%, intrinsic viscosity [η] of room temperature decane soluble part = 4.4 dl/g

In all of the impact polypropylene (A) and an impact polypropylene (CA) to be described below, the room temperature decane soluble part is a decane soluble part at 23°C.

[Impact Polypropylene (CA) Used in Comparative Examples]

· "Impact polypropylene (CA-1)": MFR (230°C, 2.16 kg load) = 129 g/10 min, proportion of room temperature decane soluble part = 14.4 mass%, intrinsic viscosity [η] of room temperature decane soluble part = 2.7 dl/g
· "Impact polypropylene (CA-2)": MFR (230°C, 2.16 kg load) = 107 g/10 min, proportion of room temperature decane soluble part = 15.9 mass%, intrinsic viscosity [η] of room temperature decane soluble part = 3.3 dl/g
· "Impact polypropylene (CA-3)": MFR (230°C, 2.16 kg load) = 56 g/10 min, proportion of room temperature decane soluble part = 12.2 mass%, intrinsic viscosity [η] of room temperature decane soluble part = 4.9 dl/g

[Ethylene-Based Elastomer (B)]

· "Ethylene-based elastomer (B-1)": Ethylene/1-octene copolymer (EOR), manufactured by The Dow Chemical Company, ENGAGE (registered trademark) 8137, MFR (190°C, 2.16 kg load) = 13 g/10 min, density = 0.864 g/cm$^3$
· "Ethylene-based elastomer (B-2)": Ethylene/1-octene copolymer (EOR), manufactured by The Dow Chemical Company, ENGAGE (registered trademark) 8100, MFR (190°C, 2.16 kg load) = 1.0 g/10 min, density = 0.870 g/cm$^3$
· "Ethylene-based elastomer (B-3)": Ethylene/1-octene copolymer (EOR), manufactured by The Dow Chemical Company, ENGAGE (registered trademark) 8407, MFR (190°C, 2.16 kg load) = 30 g/10 min, density = 0.870 g/cm$^3$

[Ethylene-Based Elastomer (CB) Used in Comparative Examples]

· "Ethylene-based elastomer (CB-1)": Ethylene/1-butene copolymer (EBR), manufactured by LG Chem Ltd., LF675, MFR (190°C, 2.16 kg load) = 14 g/10 min, density = 0.877 g/cm$^3$
· "Ethylene-based elastomer (CB-2)": Ethylene/1-butene copolymer (EBR), manufactured by Mitsui Chemicals, Inc., TAFMER (registered trademark) A-35050S, MFR (190°C, 2.16 kg load) = 35 g/10 min, density = 0.863 g/cm$^3$
· "Ethylene-based elastomer (CB-3)": Ethylene/1-butene copolymer (EBR), manufactured by Mitsui Chemicals, Inc., TAFMER (registered trademark) A-35070S, MFR (190°C, 2.16 kg load) = 35 g/10 min, density = 0.870 g/cm$^3$

[Inorganic Filler (C)]

· "Inorganic filler (C-1)": Talc (manufactured by Asada Milling Co., Ltd., trade name: JM-209, D50 in number particle size distribution (laser diffraction) 4 to 5 $\mu$m

[Foaming Agent (D)]

· "Masterbatch of organic foaming agent (D-1)": Masterbatch containing 10 to 20 mass% of ADCA (azodicarbonamide), manufactured by Eiwa Chemical Ind. Co., Ltd., POLYTHLENE EE206

[Additive]

· "Nucleating agent": Phosphate ester metal salt-based nucleating agent, manufactured by ADEKA Corporation, ADK STAB NA-11 (sodium 2,2'-methylene-bis-(4,6-di-tert-butylphenylene)phosphate)

The composition or physical properties of each component used in the Examples and the Comparative Examples were measured by the following methods.

<Content of n-Decane Soluble Part at 23°C>

2.0000 g of the impact polypropylene (A-1), 500 ml of decane, and (a small amount of) a heat-resistant stabilizer soluble in decane were loaded into a glass measurement vessel, the impact polypropylene (A-1) was dissolved by being heated up to 150°C over 2 hours while being stirred with a stirrer in a nitrogen atmosphere, maintained at 150°C for 2 hours, and then gradually cooled to 23°C over 8 hours. A sample after gradually cooling was filtered under reduced pressure with a glass filter. 100 ml of the filtrate was collected, and the collected filtrate was dried under reduced pressure to obtain a part of the decane soluble part, and the mass was measured. The proportion of the n-decane soluble part (Dsol) was determined by the following formula. In the following formula, a is the mass of a decane soluble component obtained by the reduced-pressure drying treatment, and b is the mass of the impact polypropylene (A-1) loaded into the measurement vessel.

Proportion (mass%) of n-decane soluble part (Dsol) = (500 × a)/(100 × b) × 100

Furthermore, the amount of the propylene/ethylene copolymer in the composition into which the impact polypropylene (A-1) had been blended was regarded as the product of the amount of the impact polypropylene (A-1) blended and the proportion of the n-decane soluble part.
Regarding other impact polypropylenes, similar to the impact polypropylene (A-1), the proportion of the n-decane soluble part at 23°C was obtained, and the content (parts by mass) of the propylene/ethylene copolymer in each composition of the Examples and the Comparative Examples was calculated using the obtained value.

<Intrinsic Viscosity [η]>

The intrinsic viscosity [η] of the propylene/ethylene copolymer that was specified as the n-decane soluble part (Dsol) was measured according to a normal method in decalin at 135°C. That is, approximately 20 mg of the decane soluble part obtained by the reduced-pressure drying treatment at the time of obtaining the content of the n-decane soluble part at 23°C was dissolved in 15 ml of decalin, and the specific viscosity ηsp was measured in an oil bath at 135°C. 5 ml of a decalin solvent was added to this decalin solution for dilution, and the specific viscosity ηsp was then measured in the same manner. This dilution operation was further repeated twice, and the value of ηsp/C when the concentration (C) was extrapolated to 0 was obtained as the intrinsic viscosity [η].

$$[\eta] = \lim(\eta sp/C) \quad (C \to 0)$$

<Melt Flow Rate (MFR)>

The MFR's of the impact polypropylenes (A-1) to (A-4) and the impact polypropylenes (CA-1) to (CA-3) were measured in accordance with ASTM D-1238 under conditions of 230°C and a load of 2.16 kg.
The MFR's of the ethylene-based elastomers (B-1) to (B-3) and the ethylene-based elastomers (CB-1) to (CB-3) were measured in accordance with ASTM D-1238 under conditions of 190°C and a load of 2.16 kg.
Regarding the propylene homopolymers that were contained in the impact polypropylenes (A-1) to (A-4) and the impact polypropylenes (CA-1) to (CA-3), the propylene homopolymer was separated from the impact polypropylene by the following separation treatment, and the MFR was then measured. The measurement of the MFR of the propylene homopolymer was performed in accordance with ASTM D-1238 under conditions of 230°C and a load of 2.16 kg.

(Separation Treatment of Propylene Homopolymer)

2.0000 g of the impact polypropylene (A-1), 500 ml of decane, and (a small amount of) a heat-resistant stabilizer soluble in decane were loaded into a glass measurement vessel, the impact polypropylene (A) was dissolved by being heated up to 150°C over 2 hours while being stirred with a stirrer in a nitrogen atmosphere, maintained at 150°C for 2 hours, and then filtered under reduced pressure with a glass filter. The residue that remained in the glass filter was regarded as a n-decane insoluble part (Dinsol), that is, the propylene homopolymer in the impact polypropylene (A-1).
Regarding the impact polypropylenes (A-2) to (A-4) and the impact polypropylenes (CA-1) to (CA-3) as well, the propylene homopolymer was separated by the same treatment as for the impact polypropylene (A-1).

[Example 1]

<Preparation of Resin Composition (X1)>

A resin composition (X1) was obtained by mixing 61 parts by mass of the impact polypropylene (A-1), 18.5 parts by weight of the ethylene-based elastomer (B-1), and 20.5 parts by mass of the inorganic filler (C-1). After that, the resin composition (X1) was granulated, thereby obtaining the pellets of the resin composition (X1).

<Measurement of Content of High-Molecular-Weight Polypropylene Component>

The content of a polypropylene component having a molecular weight of $10^{6.5}$ or more in the resin composition (X1) was obtained by measuring the molecular weight distribution of a measurement sample by gel permeation chromatography (GPC) under the following measurement conditions and calculating the amount of a component composed of a homopolypropylene having a molecular weight of $10^{6.5}$ or more from the integrated molecular weight distribution value.

· GPC measuring instrument

Column: Two TOSO GMHHR-H(S) HTs
Detector: RI detector for liquid chromatogram WATERS 150C

· Measurement conditions

Solvent: 1,2,4-trichlorobenzene
Measurement temperature: 145°C
Flow rate: 1.0 ml/min

Sample concentration: 5 mg/10 ml
Injection volume: 300 μL
Calibration curve: Universal Calibration
Analysis problem: HT-GPC (Ver. 1.0)

<Impact Resistance Evaluation>

The pellets of the resin composition (X1) were molded to produce a non-foam molded body, and a test piece (with a notch) was produced in accordance with ISO179 from the obtained non-foam molded body. A Charpy impact test was performed on the obtained test piece at 23°C in accordance with ISO179. Furthermore, the obtained Charpy impact value was evaluated with the following impact resistance evaluation standards.

(Impact Resistance Evaluation Standards)

O: The Charpy impact value exceeds 30 kJ/m$^2$
X: The Charpy impact value is 30 kJ/m$^2$ or less

<Injection Foam Molding>

2 parts by mass of a masterbatch of the organic foaming agent (D-1) was blended with 100 parts by mass of the pellets of the resin composition (X1). Numerical values in the column of the organic foaming agent (D-1) in Table 1 below is the amounts of the organic foaming agent (D-1) blended calculated with an assumption that 20 mass% of ADCA was contained in the masterbatch of the organic foaming agent (D-1). After the pellets and the masterbatch of the organic foaming agent (D-1) were sufficiently mixed together, injection foam molding was performed under the following conditions using an injection molding machine (J350ADS-460H type (clamping force: 3440 kN) manufactured by The Japan Steel Works, Ltd.).

<Conditions for Injection Foam Molding>

· Mold

Cavity size: 350 mm in length, 100 mm in width, and 2.0 mm in thickness
Gate: Side gate, 1 mm in thickness, 6 mm in width
Cylinder set temperature: Eight thermocouple temperatures were set to 190°C, 190°C, 205°C, 205°C, 190°C, 180°C, 160°C, and 50°C in order from the nozzle head side
Mold surface temperature: 40°C
Injection speed: 80 mm/s

· Foam molding conditions

Mold cavity clearance during injection: 2.0 mm
Molding mold clearance after end of foaming step: 3.0 mm
Core-back set time: 0.05 sec
Core-back delay time after resin filling: 0 sec

<Appearance Evaluation of Injection Molded Body>

[Flow Mark Evaluation]

On the core-back surface of the foam molded body obtained by the above injection foam molding method, whether or not a flow mark (continuous gloss change) was generated was visually confirmed. The confirmation result was evaluated with the following evaluation standards.

(Flow Mark Evaluation Standards)

O: There is no generation of a flow mark between the gate position and a position 100 mm apart from the gate.
X: A flow mark is generated between the gate position and the position 100 mm apart from the gate.

[Dimple Evaluation]

Whether or not a dimple was generated between the gate position and the position 100 mm apart from the gate was visually confirmed. The confirmation result was evaluated with the following evaluation standards.

(Dimple Evaluation Standards)

O: No dimples that can be visually confirmed are generated between the gate position and a position 100 mm apart from the gate.
X: A dimple that can be visually confirmed is generated between the gate position and a position 100 mm apart from the gate.

[Poor Foaming Evaluation]

Poor foaming (large dent) was visually confirmed at a position 100 mm apart from the end of a molded product. The results are shown in Table 1.

(Poor Foaming Evaluation Standards)

O: No 10 mm or larger dimples are generated between the end of the molded product and the position 100 mm apart from the end.
X: A 10 mm or larger dimple is generated between the end of the molded product and the position 100 mm apart from the end.

[Examples 2 to 4 and Comparative Examples 1 to 6]

Resin compositions to be used in the Examples and the Comparative Examples were prepared by adjusting the kinds and amounts of raw materials to be used as shown in Table 1 and Table 2, and samples for impact resistance evaluation and foam molded bodies were manufactured using the obtained resin compositions instead of the resin composition (X1). The impact resistance evaluation and the evaluation of the foam molded bodies were performed by the same methods as in Example 1. The obtained results are shown in Table 1 and Table 2.

[Table 1]

| | | | | Example 1 | Example 2 | Example 3 | Example 4 | Comparative Example 1 |
|---|---|---|---|---|---|---|---|---|
| Resin composition | Impact polypropylene | | Kind | A-1 | A-2 | A-3 | A-1 | CA-1 |
| | | | Amount blended (parts by mass) | 61 | 61 | 61 | 61 | 63.5 |
| | | | MFR (230°C, 2.16 kg load) (g/10 min) | 97 | 144 | 128 | 97 | 129 |
| | | | Dsol content (mass%) | 14.3 | 13.4 | 14.3 | 14.3 | 14.4 |
| | | | [η] of Dsol (dl/g) | 5.0 | 4.8 | 5.0 | 5.0 | 2.7 |
| | | | MFR of Dinsol (230°C, 2.16 kg load) (q/10 min) | 394 | 489 | 489 | 394 | 300 |
| | Ethylene-based elastomer | | Kind | B-1 | B-2 | B-3 | B-1 | B-1 |
| | | | Amount blended (parts by mass) | 18.5 | 18 | 18 | 18.5 | 16.5 |
| | | | Density (g/cm$^3$) | 0.864 | 0.870 | 0.870 | 0.864 | 0.864 |
| | | | MFR (190°C, 2.16 kg load) (g/10 min) | 13 | 1.0 | 30 | 13 | 13 |
| | | | Copolymer component | 1-octene | 1-octene | 1-octene | 1-octene | 1-octene |
| | Amount of inorganic filler (C-1) blended (parts by mass) | | | 20.5 | 21 | 21 | 20.5 | 20 |
| | Amount of nucleating agent blended (parts by mass) | | | - | - | - | 0.2 | - |
| | Content of propylene/ethylene copolymer in composition (parts by mass)* | | | 8.7 | 8.2 | 8.7 | 8.7 | 9.1 |
| Content of polypropylene component having molecular weight of $10^{6.5}$ or more (mass%)** | | | | 0.00 | 0.00 | 0.00 | 0.00 | 0.00 |
| Amount of organic foaming agent (D-1) blended (parts by mass) | | | | 0.4 | 0.4 | 0.4 | 0.4 | 0.4 |

(continued)

| | | Example 1 | Example 2 | Example 3 | Example 4 | Comparative Example 1 |
|---|---|---|---|---|---|---|
| Impact resistance | Charpy impact value | 41 | 42 | 33 | 43 | 23 |
| | Impact resistance evaluation | ○ | ○ | ○ | ○ | X |
| Flow mark evaluation | | ○ | ○ | ○ | ○ | X |
| Dimple evaluation | | ○ | ○ | ○ | ○ | ○ |
| Poor foaming evaluation | | ○ | ○ | ○ | ○ | ○ |

Dsol: Propylene/ethylene copolymer specified as decane soluble part at 23°C
Dinsol: Propylene homopolymer specified as decane insoluble part at 23°C
* The content of the propylene/ethylene copolymer in the composition is a value based on the total amount of the impact polypropylene (A), the ethylene-based elastomer (B), and the inorganic filler (C) of 100 parts by mass
** The content of the polypropylene component having a molecular weight of $10^{6.5}$ or more is a value based on the resin composition (X) of 100 mass%

[Table 2]

| | | | Comparative Example 2 | Comparative Example 3 | Comparative Example 4 | Comparative Example 5 | Comparative Example 6 |
|---|---|---|---|---|---|---|---|
| Resin composition | Impact polypropylene | Kind | CA-2 | A-4 | A-4 | A-4 | CA-3 |
| | | Amount blended (parts by mass) | 62 | 64 | 64 | 64 | 64 |
| | | MFR (230°C, 2.16 kg load) (g/10 min) | 107 | 79 | 79 | 79 | 56 |
| | | Dsol content (mass%) | 15.9 | 12.9 | 12.9 | 12.9 | 12.2 |
| | | [η] of Dsol (dl/g) | 3.3 | 4.4 | 4.4 | 4.4 | 4.9 |
| | | MFR of Dinsol (230°C, 2.16 kg load) (g/10 min) | 320 | 244 | 244 | 244 | 182 |
| | Ethylene-based elastomer | Kind | B-1 | CB-1 | CB-2 | CB-3 | B-2 |
| | | Amount blended (parts by mass) | 17.5 | 16 | 16 | 16 | 16 |
| | | Density (g/cm$^3$) | 0.864 | 0.877 | 0.863 | 0.870 | 0.870 |
| | | MFR (190°C, 2.16 kg load) (g/10 min) | 13 | 14 | 35 | 35 | 1.0 |
| | | Copolymer component | 1-octene | 1-butene | 1-butene | 1-butene | 1-octene |
| | Amount of inorganic filler (C-1) blended (parts by mass) | | 20.5 | 20 | 20 | 20 | 20 |
| | Amount of nucleating agent blended (parts by mass) | | - | - | - | - | - |
| | Content of propylene/ethylene copolymer in composition (parts by mass)* | | 9.9 | 8.3 | 8.3 | 8.3 | 7.8 |
| Content of polypropylene component having molecular weight of $10^{6.5}$ or more (mass%)** | | | 0.00 | 0.01 | 0.01 | 0.01 | 0.00 |
| Amount of organic foaming agent (D-1) blended (parts by mass) | | | 0.4 | 0.4 | 0.4 | 0.4 | 0.4 |
| Impact resistance | Charpy impact value | | 20 | 20 | 19 | 19 | 30 |
| | Impact resistance evaluation | | X | X | X | X | O |
| Flow mark evaluation | | | X | O | O | O | O |
| Dimple evaluation | | | O | O | O | O | X |

16

|  | Comparative Example 2 | Comparative Example 3 | Comparative Example 4 | Comparative Example 5 | Comparative Example 6 |
|---|---|---|---|---|---|
| Poor foaming evaluation | O | O | X | X | X |

Dsol: Propylene/ethylene copolymer specified as decane soluble part at 23°C Dinsol: Propylene homopolymer specified as decane insoluble part at 23°C * The content of the propylene/ethylene copolymer in the composition is a value based on the total amount of the impact polypropylene (A), the ethylene-based elastomer (B), and the inorganic filler (C) of 100 parts by mass ** The content of the polypropylene component having a molecular weight of $10^{6.5}$ or more is a value based on the resin composition (X) of 100 mass%

As shown in Table 1, in all of Examples 1 to 4, the obtained foam molded bodies had excellent impact resistance. In addition, no flow marks and no dimples were confirmed on the surfaces of the foam molded bodies, and no 10 mm or larger dents were generated. These results are assumed to be attributed to the fact that the viscosity balance between the polypropylene component and the ethylene-based elastomer component that were contained in the resin compositions (X), which was molded in Examples 1 to 4, was favorable, whereby the pressure change at the flow front (the tip portion of the flow of the molten resin composition (X)) was small and pulsation or meandering at the flow front was less likely to occur. That is, it is assumed that, in the case of using the resin composition (X), since the pressure change at the flow front was small, the generation of an air bubble accompanied with the pressure change was less likely to occur. Furthermore, it is assumed that the viscosity balance between the polypropylene component and the ethylene-based elastomer component was favorable, whereby, in the resin composition (X), the difference in the orientation of the ethylene-based elastomer at the flow front became relatively small, and consequently, the generation of a dimple, the occurrence of poor foaming, and the generation of a flow mark were suppressed. In addition, it is assumed that, in the resin composition (X), since the viscosity ratio between the polypropylene component and the ethylene-based elastomer component was favorable, as a result of the favorable dispersion of the ethylene-based elastomer, the foam molded body that was obtained from the resin composition (X) had excellent impact resistance.

On the other hand, in Comparative Examples 1 and 2, since the intrinsic viscosities of the propylene/ethylene copolymer components that were contained in the impact polypropylenes were low, the evaluation results of the impact resistance and the flow mark evaluation results were poor. In Comparative Example 3, since the density of the ethylene-based elastomer (CB-1) was high, and the dispersibility of the ethylene-based elastomer (CB-1) was poor, the impact resistance was poor. In Comparative Examples 4 and 5, since the MFRs of the ethylene-based elastomers were high, the impact resistance was poor, and furthermore, poor foaming occurred. In Comparative Example 6, since the MFR of the impact polypropylene was low, turbulence was likely to occur at the flow front, and as a result, a dimple was generated on the surface of the molded body, and furthermore, poor foaming also occurred.

## Claims

1.   A polypropylene-based resin composition (X), comprising:

20 parts by mass or more and 80 parts by mass or less of an impact polypropylene (A) that satisfies the following requirements (a-1) and (a-2);
10 parts by mass or more and 40 parts by mass or less of an ethylene-based elastomer (B) that satisfies the following requirements (b-1) and (b-2); and
10 parts by mass or more and 40 parts by mass or less of an inorganic filler (C) that is talc, provided that a total amount of the impact polypropylene (A), the ethylene-based elastomer (B), and the inorganic filler (C) is 100 parts by mass,
wherein the following requirement (x-1) is satisfied:

(a-1) an MFR measured at 230°C and a load of 2.16 kg in accordance with ASTM D-1238 is 60 g/10 min or more and 300 g/10 min or less;
(a-2) a propylene/ethylene copolymer that is specified as a decane soluble part at 23°C is contained, and an intrinsic viscosity [η] of the propylene/ethylene copolymer measured in decalin at 135°C is 4.1 dl/g or more and 10 dl/g or less;
(b-1) an MFR measured at 190°C and a load of 2.16 kg in accordance with ASTM D-1238 is 0.5 g/10 min or more and 30 g/10 min or less;
(b-2) a density is 0.85 $g/cm^3$ or more and 0.875 $g/cm^3$ or less; and
(x-1) a content of a polypropylene component having a molecular weight of $10^{6.5}$ or more is less than 0.05 mass% relative to 100 mass% of the polypropylene-based resin composition (X).

2.   The polypropylene-based resin composition (X) according to claim 1, wherein the impact polypropylene (A) further satisfies at least one of the following requirements (a-1-1), (a-2-1), and (a-5):

(a-1-1) an MFR measured at 230°C and a load of 2.16 kg in accordance with ASTM D-1238 is 77 g/10 min or more and 200 g/10 min or less;
(a-2-1) the propylene/ethylene copolymer that is specified as a decane soluble part at 23°C is contained, and an intrinsic viscosity [η] of the propylene/ethylene copolymer measured in decalin at 135°C is 4.2 dl/g or more and 5.9 dl/g or less;
and

(a-5) a content of the propylene/ethylene copolymer that is specified as the decane soluble part (Dsol) at 23°C that is contained in the impact polypropylene (A) is 5 to 30 mass%, based on a mass of the impact polypropylene (A) of 100 mass%.

3. The polypropylene-based resin composition (X) according to claim 1, wherein a content of the propylene/ethylene copolymer in the polypropylene-based resin composition (X) is 5 parts by mass or more and 30 parts by mass or less, provided that the total amount of the impact polypropylene (A), the ethylene-based elastomer (B), and the inorganic filler (C) is 100 parts by mass.

4. The polypropylene-based resin composition (X) according to claim 1, wherein the ethylene-based elastomer (B) is a copolymer of ethylene and an $\alpha$-olefin having 3 to 10 carbon atoms.

5. The polypropylene-based resin composition (X) according to claim 1, wherein

a content of the impact polypropylene (A) is 25 parts by mass or more and 74 parts by mass or less,
a content of the ethylene-based elastomer (B) is 10 parts by mass or more and 40 parts by mass or less, and
a content of the inorganic filler (C) is 16 parts by mass or more and 35 parts by mass or less, provided that the total amount of the impact polypropylene (A), the ethylene-based elastomer (B), and the inorganic filler (C) is 100 parts by mass.

6. A foam molded body that is composed of the polypropylene-based resin composition (X) according to any one of claims 1 to 5 and is molded using a foaming agent (D).

7. A part for automobile interior and exterior, comprising the polypropylene-based resin composition (X) according to any one of claims 1 to 5.

8. An arch molding, comprising the polypropylene-based resin composition (X) according to any one of claims 1 to 5.

9. A rocker molding, comprising the polypropylene-based resin composition (X) according to any one of claims 1 to 5.

10. A method for manufacturing a foam molded body, comprising a step of foaming the polypropylene-based resin composition (X) according to any one of claims 1 to 5.

11. The method for manufacturing a foam molded body according to claim 10, wherein injection foam molding or core-back injection molding is performed.

**EP 4 563 640 A1**

## INTERNATIONAL SEARCH REPORT

International application No.

**PCT/JP2023/027251**

| A. | CLASSIFICATION OF SUBJECT MATTER |
|---|---|

*C08L 23/10*(2006.01)i; *C08K 3/013*(2018.01)i; *C08L 23/08*(2006.01)i
FI:  C08L23/10; C08K3/013; C08L23/08

According to International Patent Classification (IPC) or to both national classification and IPC

| B. | FIELDS SEARCHED |
|---|---|

Minimum documentation searched (classification system followed by classification symbols)

C08L23/10; C08K3/013; C08L23/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2016-166272 A (PRIME POLYMER CO LTD) 15 September 2016 (2016-09-15) claims, paragraphs [0024], [0072], examples | 1-5, 7 |
| Y | | 6, 8-11 |
| Y | JP 2003-253084 A (MITSUI CHEMICALS INC) 10 September 2003 (2003-09-10) claims, paragraphs [0060]-[0062] | 6, 10-11 |
| Y | JP 2015-063620 A (UCHIHAMA KASEI KK) 09 April 2015 (2015-04-09) claims, paragraph [0017] | 8-9 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 August 2023** | **10 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

20

## INTERNATIONAL SEARCH REPORT
### Information on patent family members

International application No.

**PCT/JP2023/027251**

| Patent document cited in search report | | | Publication date (day/month/year) | Patent family member(s) | Publication date (day/month/year) |
|---|---|---|---|---|---|
| JP | 2016-166272 | A | 15 September 2016 | (Family: none) | |
| JP | 2003-253084 | A | 10 September 2003 | (Family: none) | |
| JP | 2015-063620 | A | 09 April 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008255191 A
- JP 2010144133 A
- JP 2014196398 A